# EUROPEAN PATENT APPLICATION

(11) **EP 3 035 260 A1**
(43) Date of publication of application: **22.06.2016**
(21) Application number: 15199747.5
(22) Date of filing: 14.12.2015
(51) Int. Cl.: G06Q 10/06, G06Q 10/00

(54) **CASE MANAGEMENT LINKAGE OF UPDATES, EVIDENCE, AND TRIGGERS**

(30) Priority: 15.12.2014 US 201462091979 P; 20.10.2015 US 201514887939
(71) Applicant: GE Intelligent Platforms, Inc., Charlottesville, VA 22911 (US)
(72) Inventor: FARRELL, David Sean, San Ramon, CA California 94583 (US); COURTNEY, Brian Scott, Plano, TX Texas 75074 (US)
(74) Representative: Illingworth-Law, William Illingworth

(57) **Abstract**

Approaches are provided for a case management system where one or more exceptions are detected at an industrial machine. A case 112 is then created which represents the one or more exceptions. Additional exceptions may also be linked to the created case 112 which may occur after the creation of the case. The case is stored in an electronic database. One or more first trigger indications are generated which lead to updates to the case 112 at a first time. The case is then responsively updated with first evidence and a first accompanying interpretation. The first update, trigger indications, evidence, and the accompanying interpretation are then linked in an electronic database to form a first linkage which is interpreted such that the evidence, interpretation, and underlying trigger are examined in the context of each other, and an action may be determined to take in mitigating the issue at the industrial machine.

## Description

### BACKGROUND OF THE INVENTION

### FIELD OF THE INVENTION

The subject matter disclosed herein generally relates to managing system cases and related occurrences.

### BRIEF DESCRIPTION OF THE RELATED ART

In industrial operations, equipment and systems are monitored to ensure proper operation and/or detect anomalies which may arise. During operation, problems oftentimes occur which may warrant an operator or maintenance engineer's involvement. Depending on the severity and complexity of the threat, a solution might be easily employed. However, in many environments, determining the appropriate solution to address the problem may be a lengthy, resource-intensive process.

Depending on the particular failure threat and its overall complexity, there may be any number of approaches to address it and provide a desired outcome. These approaches may have varying degrees of difficulty and user involvement to ascertain and implement. Further, some approaches may not be known until a given period of time has elapsed and/or any number of alternative issues may be properly ruled out. In environments in which anomalies or failures occur with some frequency, the process of determining the solution to the problem may result in users unnecessarily exploring options which may be previously shown to have failed or produce less than desirable results.

In some environments, predictive mathematical modeling systems have the capability to detect a developing problem long before it leads to system or component failure. The early notice systems allow greater opportunity to effectively plan and prevent the failure, but may give rise to a lengthy evaluation and decision life cycle. Oftentimes, a user may be unable to ascertain the relation between events and their implication for how and when to address the issue, which may leave the maintenance or operations teams in a state of confusion and disarray.

Further, in some environments, a small number of engineers may be highly knowledgeable and have a unique understanding of the system and its constructs. These users may be able to quickly identify issues and, based on their past experiences, quickly and efficiently address the problem. However, operator or knowledge turnaround may result in a situation in which a subsequent operator may lack the understanding of the system that the expert was in oversight of. Accordingly, substantial time expenditures may be required to reach the level of skill possessed by the subsequent operator if it is even possible to obtain.

The above-mentioned problems have resulted in some user dissatisfaction with previous approaches, sub-optimal application of resources in managing operations, and sub-optimal results in maintaining uptime and effective system performance.

### BRIEF DESCRIPTION OF THE INVENTION

The approaches described herein provide systems and related methods that allow for operating equipment or system failure threat cases to be properly managed. Information related to a particular anomaly in machine or system operation is organized or identified as a case. Case updates including evidence of the problem and its severity, expert interpretations, and business process triggers (such as collaboration or specified actions) leading to the case updates may be electronically linked to each other to provide a robust system illustrating past, present, and future approaches to addressing the case. By providing the case, or a software vessel that contains information regarding user interactions, their expertise, and supporting information necessary to determine an optimum resolution path, users may quickly access this information and make informed decisions in present and future systems.

In some approaches, numerous cases having similarities may occur within the context of a machine or system type. The approaches described herein may make smart suggestions based on best practices to address issues which may arise in newer systems having similar components and/or constructs.

Accordingly, the ability to clearly link the different logical elements may provide a strong aid in obtaining an understanding of how the case has evolved over time as opposed to having information and content coupled together in a non-relatable way. A new level of explicit visual and analytical clarity may be provided as to how the case has evolved, allowing clarity in how the data and human factors relate over the lifecycle of the case, and the user building of knowledge in the practices utilized to address problems of given types. These approaches extend beyond simply providing information regarding detected anomalies, but also extend to assist users in understanding the issue they are facing and offer guidance regarding possible solutions. Based partially on analytics performed at a remote computing environment, a user may receive preconfigured instructions on how to address and correct issues.

These approaches also provide for a "foresight" analysis in which based on a combination of received data, predictive mathematical modeling, and information stored in a knowledge base, the remote computing device may automatically inform an operator of upcoming issues to be addressed and transmit remedying practices prior to the issues presenting themselves. An operator may receive an electronic message that displays historical cases and provides a linked sequence of evidence, interpretive user updates, and triggers of various types prompting the updates for the engineer to follow if they so choose.

When an incident or anomaly in operation occurs, an operator may create a case to provide information in an organized manner. The operator may link in the evidence, the expert interpretation associated with the evidence, and/or the triggers that led to the update occurring to each other such that a visual aid is created. This information may not only be used to assist the operator in ascertaining a solution to the present case, but it also may be used in subsequent cases to better aid operators from exploring resolutions which have been historically shown to be ineffective. Additionally, the system may be configured to automatically access past cases which may be related to the present case to assist the operator in determining the best solution. Any information that is used in the present case may also be linked to provide additional information within the apparatus.

In many of these examples an approach is provided where one or more exceptions are detected at an industrial machine. A case is then created which represents the one or more exceptions. Additional exceptions may also be linked to the created case which may occur after the creation of the case. The case is stored in an electronic database.

One or more first trigger indications are generated which lead to updates to the case at a first time. The case is then responsively updated with first evidence and a first accompanying interpretation. The first update, trigger indications, evidence, and the accompanying interpretation are then linked in an electronic database to form a first linkage. The evidence is information available in electronic form which illuminates aspects of the case. The interpretation is expert notes as to the meaning and urgency of that information. Triggers are occurrences in the operating or analytical systems, or assignment/events in the business process as supported in the case management system, which spur the updates to evidence/interpretation at that particular time. Next, the first linkage is interpreted, meaning the evidence, interpretation, and underlying trigger are examined in the context of each other, and an action may be determined to take in mitigating the issue at the industrial machine. This action is based upon an interpretation of the first linkage.

In some examples, one or more subsequent trigger indications are generated to update the case at a subsequent time. The case is then responsively updated with subsequent evidence and a subsequent accompanying interpretation. The subsequent trigger indications, subsequent evidence, and subsequent accompanying interpretation are linked in an electronic database to form a second linkage which is then interpreted. An action to take at the industrial machine is then determined. This action is based upon at least one of an interpretation of the first linkage, the second linkage, or the relation between the first linkage and the second linkage. It is understood that any number of subsequent trigger indications may be generated to update the case at a subsequent time.

In many of these examples, the entire series of updates are logged to a cloud-based knowledge base so that over time, insights may be gleaned as to tendencies of similar cases of various types to progress in different ways in addition to various strategies that may be used and their overall effectiveness. After a resolving action is taken, the case may be closed. Accompanying this closure, outcome notes are logged which encompass the true-found nature of the problem, the resolving action chosen, as well as quantitative and/or qualitative measures of the impact. From either a positive or negative sense (or both), the problem and action taken to address it have a certain cost (e.g., lost machine production, cost of repairs, etc.), but also may potentially have savings, as effective action from the case management process may have been judged to effectively prevent an even larger cost.

Accordingly, in the future, as many similar cases are aggregated in the knowledge base, their linked evidence, interpretation, and history of triggers to the updates may be summarized graphically or statistically, or both, and may be correlated against the outcome for guidance on subsequent similar cases. As an example, in a future case, engineers may view the effects of various "check-up" periods. If periodic inspections of the problem indications occur on a weekly basis are shown to lead to significantly lower ultimate costs than infrequent check-ups (which may be due to, for example, the occurrence of sudden escalating failures that are missed), this may provide guidance to the best practice in addressing the new case. Conversely, if no benefit is shown between frequent check-ups as compared to infrequent check-ups, it may be concluded that resources are wasted on the more frequent check-ups, and thus those resources may be reassigned to more value-added activities.

In others of these embodiments, at a local computing device, a case is electronically generated which represents an issue or anomaly with a machine or system. The case may be represented and stored as a data structure. The case is structured so as to allow a user to provide updates to the case, evidence relating to the case, and triggers spurring the updates and evidence. The case may further include information describing the particular area of the machine/system at issue.

The case may be visualized on the local computing device and may provide a sequential presentation of this information provided thereto. The user may link the evidence, updates, and/or triggers to each other to assist in providing a comprehensive illustration of the case.

In some approaches, upon creating the case at the local computing device, an electronic message may be transmitted to a remote computing device. The electronic message may indicate that a new case has been generated and what particular component or components of the industrial machine are involved, and the characteristic evidence initially associated with the case. The remote computing device may automatically analyze the electronic message and store the information to a memory. This memory may include a knowledge database containing any type of information such as historical trends, past cases, expert opinions, and the like. Based on the contents of the electronic message, the remote computing device may access the memory to retrieve any relevant information contained within the knowledge database and may transmit an electronic message to the local computing device which contains this information.

In many of these approaches, the operator may transmit a request to view historical cases which are similar in scope to the present case. The remote processing device may transmit this information back to the local computing device such that the historical case is presented. The operator may then observe information of updates, evidence, triggers, and how they relate together in time and across user roles, to determine an appropriate response to the issue.

In some forms, data may be processed by the local computing device and transmitted to the remote computing device. Through an analytic system stored on the remote computing device, at least one anomaly associated with the industrial system may be identified. The analytic system may then automatically determine a potential resolution to address the anomaly and transmit a message containing information on how to address the anomaly to the case being visualized at the local computing device.

In some approaches, the remote computing device may be a remote networking device located in the cloud and may be electronically linked to or coupled with the local computing device to transmit information.

In some approaches, a user may manually provide information relating to the operation of an industrial machine and/or its particular components. This information may be stored within the knowledge database.

In many of these embodiments, a case management system is provided and includes a local computing device and a remote computing device coupled to one another. The system may further include the system which is linked to the local computing device. The industrial machine may be configured to transmit data to the local computing device which in turn may be configured to analyze the data and detect at least one anomaly associated with the industrial machine. The local computing device may further allow users to generate a case representing the anomaly, and accept information relating to case updates to evidence, interpretation, and the triggers associated with making the updates. The local computing device may also be configured to transmit an electronic message to the remote computing device containing information relating to the case, whereupon the remote computing device may receive this information and access a knowledge base stored at a memory of the remote computing device to obtain information relating to the case.

The remote computing device may then be configured to transmit an electronic message to the local computing device which includes the information relating to the case which may be visualized by the local computing device. An engineer may then review this information and make a decision on how to proceed with addressing the anomaly.

### BRIEF DESCRIPTION OF THE DRAWINGS

For a more complete understanding of the disclosure, reference should be made to the following detailed description and accompanying drawings wherein:
FIG. 1 comprises a block diagram illustrating an exemplary system for case management linkage of updates, evidence, and triggers according to various embodiments of the present invention;
FIG. 2 comprises an illustration of an informational flow diagram for linking updates, evidence, and triggers according to various embodiments of the present invention; and
FIG. 3 comprises an illustration of a sequential case management linkage of updates, evidence, and triggers according to various embodiments of the present invention.

Skilled artisans will appreciate that elements in the figures are illustrated for simplicity and clarity. It will further be appreciated that certain actions and/or steps may be described or depicted in a particular order of occurrence while those skilled in the art will understand that such specificity with respect to sequence is not actually required. It will also be understood that the terms and expressions used herein have the ordinary meaning as is accorded to such terms and expressions with respect to their corresponding respective areas of inquiry and study except where specific meanings have otherwise been set forth herein.

### DETAILED DESCRIPTION OF THE INVENTION

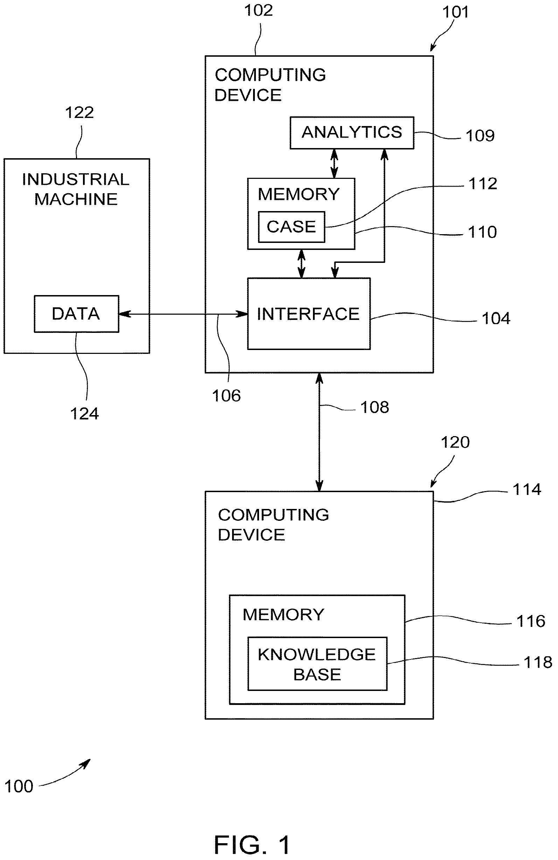

Referring now to FIG. 1, one example of a system 100 for case management linkage of updates, evidence, and triggers is described. The system 100 includes a central monitoring center 101 having a computing device 102 that includes an interface 104 with an input 106 (including a user input) and an output 108, analytics 109, and a memory 110 which includes a current case 112. Users may connect to this device via a network to interact with the case 112 and its data. The users may be at different sites, such as the actual operational location where the machines reside or alternatively may be at a remote monitoring center which reviews the analytics that produce the indications which initiate the case. The system 100 may also include a data center 120 having a computing device 114. The computing device 114 may include a memory 116 containing a knowledge base 118. In an alternative and as discussed below, the memory 116 may be at least partially disposed outside the computing device 114. Either or both of the computing devices 102, 114 may be disposed on a cloud based network. Further, the system 100 includes an industrial machine 122 or system, which generates data 124.

The computing device 102 is any combination of hardware devices and/or software selectively chosen to host predictive analytics to generate threat advisories and also to generate, display, and/or transmit cases, information, and/or other communications. The interface 104 is a computer based program and/or hardware configured to accept a command at the input 106 bi-directionally exchange input information, generated information via the analytics 109, and stored knowledge through the interface's output 108. The interface 104 may output to a screen or a graphical user interface which allows for a visualization to be made. Thus, the function of the interface 104 is to allow the computing device 102 to communicate with and receive information from a user, the industrial machine 122, another computing device (e.g., the computing device 114), the analytics 109, and the memory 110, as well as to provide a visualization of contents contained on these devices.

The computing device 114 may be deployed at a data center 120 or any other networking construct such as a cloud-based environment. This may be any combination of networking components such as servers, switches, constructs, and/or other components used to provide network access to a number of systems. In some forms, this may include multiple networks or apparatuses which serve different purposes within the system constructs.

The analytics 109 may be coupled to the interface 104 and the memory 110. The analytics 109 is responsible for analyzing the data 124 from the industrial machine 122.

The analyzing process may be in accordance with a pre-described framework contained within the system.

The memory 110 may be stored on the computing device 102. In some examples, at least a portion of the contents of the memory 110 may be stored within the memory 116. The memory 110 stores the generated case 112 which may be visualized by the computing device 102 via the output 108. Users may be in different locations such as the actual operational site or a remote monitoring center with experts collaborating with and supporting the site engineers.

In one aspect, the case 112 may be any data structure (or combination of data structures). The case 112 is structured so as to allow a user to provide updates to the case, including evidence relating to the case, and their expert interpretation as to the meaning and implication of the evidence (that is, what the issue might be, and what to do about it at a particular time). Ancillary capabilities such as collaboration, workflow with assignment/request timers, analytic escalation notifications, and other constructs will trigger updates to the case evidence and interpretation, and these triggers are then explicitly linked to the updates. That is, whatever data structure is used, the data structure is easily modified. The case 112 may further include metadata describing the particular nature of the industrial machine at issue.

The memory 116 stores the knowledge base 118 and may be stored directly at the computing device 114. In some examples, the knowledge base 118 may be at least partially stored on the memory 110 of the computing device 102 at the central monitoring center 101. In one example, temporary, local copies of the current case's knowledge that is stored or backed up after case closure may be contained within the knowledge base 118. The knowledge base 118 may be any collection of information from various sources relating to the operation of the industrial machine 122. The knowledge base 118 may be any data structure (or combination of data structures) that includes any number of data elements used to interpret and/or analyze data relating to the industrial system 122 and/or outcome metrics from past cases. As such, the knowledge base 118 may be indexed by analytic blueprints and their failure mode information, from the predictive analytic solutions residing on either computing device. It is understood that in some forms, only a portion of the memory 116 stores the knowledge base 118 and the remainder is stored at another location.

The industrial machine 122 or equipment/operating system may be any type of machine involved in the operation, having any number of components or systems operating thereon. The industrial machine 122 generates data 124 through any number of components such as switches, calculations, readings, sensors, and the like, and aggregates/archives the data in storage procured for that operating data. The data 124 may be derived from any type of component capable of providing data to the input 106. In one example, time series data from machine sensors is transmitted to the input 106. By "time series data" and as used herein, it is meant data relating to the operation of the industrial machine 122 being obtained, presented, and/or organized in a sequential manner according to time. Thus, time series data allows for a user or system to measure a change in a characteristic of the industrial machine 122 over a provided period of time. This data 124 may be derived from pumps, turbines, diesel engines, jet engines, or other industrial components or devices. Other examples are possible.

The data structures utilized herein may utilize any type of programming construct or combination of constructs such as linked lists, tables, pointers, and arrays, to mention a few examples. Other examples are possible.

The computing devices 102 and 114 may also have processors (not shown) which are commonly known to those having skill in the art. These processors may be a combination of hardware devices and/or software. The processor may be physically coupled to the interface 104 and/or the memory 110, 116 through data connections (e.g., an Ethernet connection), or it may communicate with the interface 104 and/or the memory 110, 116 through any number of network communications protocols.

It will be appreciated that the various components described herein may be implemented using a general purpose processing device executing computer instructions stored in memory.

In one example of the operation of FIG. 1, one or more exceptions are detected at the industrial machine 122 and stored on data 124. A case 112 is then created which represents the one or more exceptions. Additional exceptions may also be linked to the created case 112 which may occur after the creation of the case 112. The case 112 is stored in an electronic database on the memory 110. Exceptions may include various types of alarms.

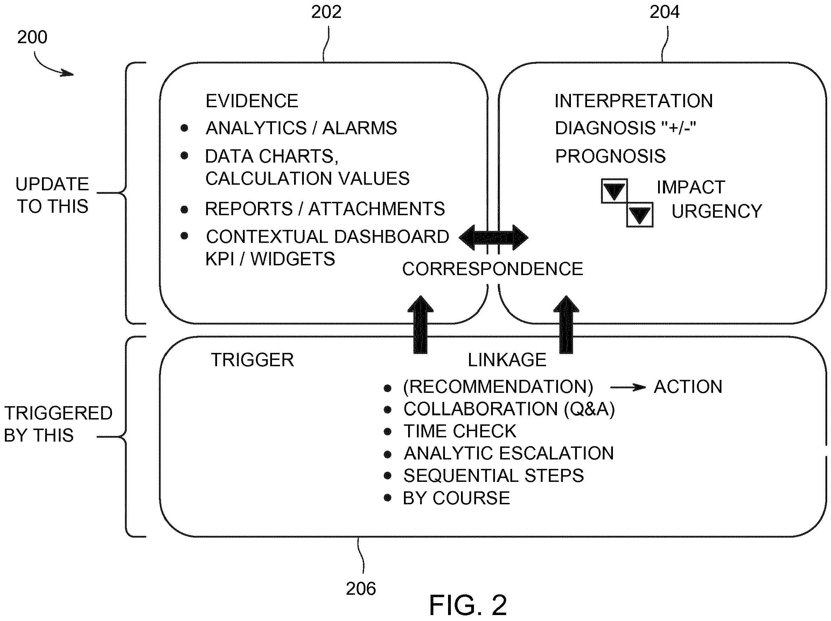

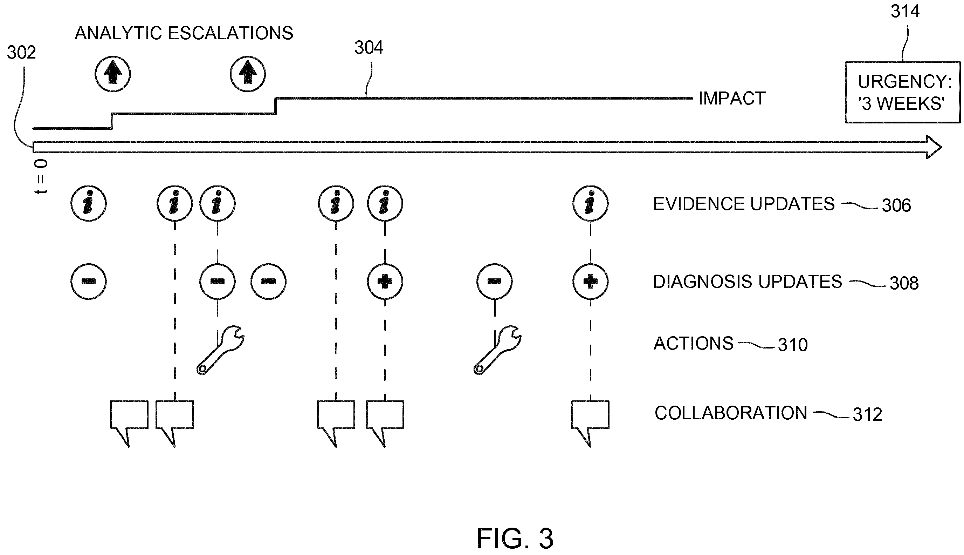

One or more first trigger indications (described further with regards to FIG. 2 below) are generated which update the case 112 at a first time. The case 112 is then responsively updated with first evidence and a first accompanying interpretation. The first trigger indications, evidence, and the accompanying interpretation are then linked in an electronic database on the memory 110 to form a first linkage. Next, the first linkage is interpreted, and an action may be determined to take an industrial machine. This action is based upon an interpretation of the first linkage. It is understood that the first linkage may be interpreted on a user display as depicted in the illustration of FIG. 3.

In some examples, one or more second trigger indications are generated to update the case 112 at a second time. The case 112 is then responsively updated with second evidence and a second accompanying interpretation. The second trigger indications, second evidence, and second accompanying interpretation are linked in an electronic database on the memory 110 to form a second linkage which is then interpreted. An action to take at the industrial machine may then determined. This action is based upon at least one of an interpretation of the first linkage, the second linkage, or the relation between the first linkage and the second linkage.

The computing device 102 communicates with the industrial machine 122 and transmits only the required data therefrom according to the knowledge base 118. This may be a variety of information pertaining to the industrial components of the industrial machine 122, threat cases detected and worked to resolution over time, and the outcome/resolutions of those cases. Outcomes include what was done to mitigate the threat and the resulting impact (e.g., how much production was lost, the cost of repairs, etc.). The computing device 102 is configured to automatically accept the input data and determine whether an anomaly is present, off of which the user may generate a case 112 to be administered.

Upon the computing devices 102 detecting an anomaly, this information is then presented via the output 108 to inform the operator of the presence of the anomaly. The operator may then create a case 112 in which they may save information relating to the anomaly. The operator may provide information updates relating to evidence, expert interpretation, and/or case update triggers, and this case may automatically be associated to other past and/or similar cases in the knowledge base 118 through rules, logic, metadata, and the like in the analytic blueprint and/or failure modes.

The computing device 102 at the central monitoring center 101 may transmit an electronic message containing all or part of the case information to the computing device 114 at the data center 120. This information may then be stored on the memory 116. The computing device 114 at the data center 120 may then analyze the information and compare it to information contained in the knowledge base 118. If the computing device 114 determines there is relevant information in the knowledge base 118 which pertains to the case, it may automatically transmit this information back to the computing device 102 at the central monitoring center 101, where the output 108 may display this information to the operator.

In the event that there is no relevant information within the knowledge base 118, the operator may still update the case 112 which may be viewed via the output 108. The user may provide evidence, interpretations, and related workflow triggers as information relating to how to address the anomaly. In some examples, the case 112 may be updated automatically as the analytics detect different progression in the issue. This information may be provided over any period of time, and the content of the information as well as the time it was provided will be stored within the case 112 to be accessed in the future if so desired.

Upon determining an appropriate resolution for the anomaly, the case 112 may again be updated to reflect the outcome. The case 112 may then be transmitted to the computing device 114 at the data center 120 via the output 108 and may be stored in the knowledge base 118. So configured, the case 112 may be used by the knowledge base 118 to attempt to determine a solution for future anomalies generated by the industrial machine 122.

Referring now to FIG. 2, an illustration of an informational flow diagram 200 for linking updates, evidence, and triggers is provided. The diagram 200 includes an evidence field 202 (which may comprise multiple pieces of evidence), an interpretation field 204 of the evidence, and a trigger field 206. Contents within these fields may be linked together to form linkages within the case 112 depicted in FIG. 1.

The evidence field 202 may be information which describes the case and provides an understanding of its various aspects. For example, the evidence field 202 may include alarms, data charts or calculated values, and/or reports obtained from the industrial machine 122 of FIG. 1. When within the case and its interface, the analyst may select information that is particularly relevant to the understanding of the anomaly and bind it to the case as an item.

The interpretation field 204 may be generally described as capturing an expert human assessment of the received evidence illustrated in the evidence field 202. The items contained in the interpretation field 204 may be in the form of free text fields or drop down selections having a discrete set of values (e.g., "high/medium/low," etc.) For example, based on the evidence received, the interpretation will provide the case with a scope of what is potentially at stake. This interpretation may further be described as a diagnosis and/or a prognosis.

The diagnosis indicator may be used to describe the suspected developing failure mode. This may include positive and negative content concepts which may be used to advance what is thought to be the issue or ruling out what is determined not to be the cause of the anomaly. In other words, the diagnosis indicator is used to indicate whether a component, item, or feature provided in a list or lists of potential causes of the anomaly may in fact be the cause. A user may manually change this indicator to represent whether the component may be a cause (e.g., by using a "+" annotation) or may not be a cause (e.g., by using a "-") of the anomaly.

The prognosis indicator may be used to describe the impact and/or the urgency of the case. By urgency, it is meant how soon the expert feels the issue should be addressed.

The trigger field 206 in the diagram shows several different potential events or practices which may be the cause to spur an update of the evidence and/or the interpretation at a given time. These triggers are the impetus for the operator to perform updates. In other words, the event or events which compelled the expert to make the update to the case at a given time are described by the triggers. For example, a trigger may include an action and/or recommendation obtained from a source. An example of an action may be a walk-down inspection, modifying an operating set-point, or so on. Other triggers may include collaboration with other operators and/or experts which suggest a solution, a time check provided by the case or the system in which the case or system periodically notifies the operator to examine or observe a condition, an analytic escalation or a change or modification in an alarm, sequential steps, or items which have simply occurred by course during the normal exploration of the solution.

So configured, an operator may directly enter and visualize through the output 108 of FIG. 1, among the updates and activity, a linkage between these updates. When evidence is added to the case and the interpretation is updated, the operator may link these updates and the trigger that spurred them. Such a visualization will provide greater clarity on what evidence supports which updates to the interpretation (or vice versa) and what in the business or analysis process or other underlying facts led to an update occurring at the particular time in the case life cycle.

These linkages may also provide insight to practices which may be used to address the case. The linkages may answer questions such as what evidence should be observed to rule out given failure modes, what is the next failure mode to consider ruling out, what the frequency is of checking up on issues, and how does the frequency correlate with the outcome of the case, how much communication is occurring between operators, and how frequently and soon are experts brought into the case and how often do these collaborations result in a material update to the case. Other examples are possible.

Referring now to FIG. 3, one example of an illustration 300 of a sequential case management visual timeline which links updates, evidence, and triggers is described. The illustration 300 corresponds to a visual depiction of information contained in the case 112 of FIG. 1. The illustration 300 includes a horizontal scale of time 302, which extends to the period of urgency 314, the impact 304 of the linked items, evidence updated 306, diagnosis updates 308, actions 310, and collaboration events 312. This illustration may be presented to the user at a screen via the output 108 of the computing device 102 of FIG. 1.

In some forms, changes to the impact 304 line are represented in a step function plot. Iconic indicators may be used to indicate the occurrences of updates, and a visual indicator (e.g., the dotted lines) links the triggers (the actions 310 and/or collaboration 312) with the evidence updates 306 and diagnosis updates 308. As such, a visual rendering of a linkage or a number of linkages between triggers and updates may be provided to a user via the output 108 of FIG. 1. So configured, the case provides a summary graphic to quickly understand the case's life cycle and contents which have occurred. Additionally, the illustration 300 serves as a navigation mechanism in which segments may be selected and explored outside of the case's entire body of content which may be difficult to navigate due to the size of the case.

Various aspects and embodiments of the present invention are defined by the following numbered clauses:
1. A method comprising:
   storing a case data structure in a memory device, the case data structure representing characteristics of a case associated with an abnormality detected in an industrial machine or system, the case data structure comprising:
      - an evidence field with evidence, the evidence being a characteristic associated with the industrial machine or system;
      - an interpretation field with an interpretation, the interpretation being a user determined condition based at least in part on the evidence; and
      - a trigger field with a trigger, the trigger being an occurrence or determination that prompts a user to modify the case data structure;
   receiving a first trigger indication at a first time;
   modifying one or both of the evidence field and the interpretation field in response to receiving the first trigger indication at the first time to provide one or both of a first evidence and a first accompanying interpretation; and
   linking the first trigger indication to one or both of the first evidence and the first accompanying interpretation to provide a first linkage associated with the first time.
2. The method of clause 1, further comprising:
   receiving a second trigger indication at a second time;
   modifying one or both of the evidence field and the interpretation field in response to receiving the second trigger indication at the second time to provide one or both of a second evidence and a second accompanying interpretation; and
   linking the second trigger indication to one or both of the second evidence and the second accompanying interpretation to provide a second linkage associated with the second time.
3. The method of clause 1 or clause 2, further comprising:
   storing at least one of the first linkage and the second linkage in the memory device.
4. The method of any preceding clause, further comprising:
   displaying at least one of the first linkage and the second linkage on a display device.
5. The method of any preceding clause, further comprising:
   transmitting at least a portion of the case data structure to a remote computing device; and
   receiving information pertaining to the case from the remote computing device.
6. The method of any preceding clause, wherein the information pertaining to the case received from the remote computing device comprises one or more historical case data structures, the one or more historical case data structures comprising at least one historical linkage comprising historical evidence, a historical interpretation, and a historical trigger.
7. The method of any preceding clause, wherein the interpretation field further comprises:
   a diagnosis indicator indicative of a suspected developing failure mode; and
   a prognosis indicator indicative of one or more of a case impact and a case urgency.
8. The method of any preceding clause, wherein the first trigger indication comprises one or more of a walk-down inspection, modification of an operating set-point, a collaboration, a recommendation, a time check, an analytic escalation, a change in an alarm, or a change in sequential steps.
9. The method of any preceding clause, wherein the first linkage comprises an indication associating the first trigger indication with one or both of the first evidence and the first accompanying interpretation.
10. An apparatus comprising:
   an interface including an input and an output;
   a memory device, the memory device including a case data structure, the case data structure representing characteristics of a case associated with an abnormality detected in an industrial machine or system, the case data structure comprising:
      - an evidence field with evidence, the evidence being a characteristic associated with the industrial machine or system;
      - an interpretation field with an interpretation, the interpretation being a user determined condition based at least in part on the evidence;
      - a trigger field with a trigger, the trigger being an occurrence or determination that prompts a user to modify the case data structure; and
   a processor coupled to the memory device and the interface, the processor configured to receive at the input a first trigger indication at a first time, the processor configured to modify one or both of the evidence field and the interpretation field in response to receiving the first trigger indication at the first time to provide one or both of a first evidence and a first accompanying interpretation, the processor further configured to link the first trigger indication to one or both of the first evidence and the first accompanying interpretation to provide a first linkage associated with the first time.
11. The apparatus of any preceding clause, wherein the processor is further configured to receive at the input a second trigger indication at a second time, the processor further configured to modify one or both of the evidence field and the interpretation field in response to receiving the second trigger indication at the second time to provide one or both of a second evidence and a second accompanying interpretation, the processor further configured to link the second trigger indication to one or both of the second evidence and the second accompanying interpretation to provide a second linkage associated with the second time.
12. The apparatus of any preceding clause, wherein the memory device is further configured to store at least one of the first linkage and the second linkage.
13. The apparatus of any preceding clause, further comprising:
   a display device configured to display at least one of the first linkage and the second linkage.
14. The apparatus of any preceding clause, wherein the processor is further configured to transmit via the output at least a portion of the case data structure to a remote computing device, the processor further configured to receive at the input information pertaining to the case from the remote computing device.
15. The apparatus of any preceding clause, wherein the information pertaining to the case received from the remote computing device comprises one or more historical case data structures, the one or more historical case data structures comprising at least one historical linkage comprising historical evidence, a historical interpretation, and a historical trigger.
16. The apparatus of any preceding clause, wherein the interpretation field further comprises:
   a diagnosis indicator indicative of a suspected developing failure mode; and
   a prognosis indicator indicative of one or more of a case impact and a case urgency.
17. The apparatus of any preceding clause, wherein the first trigger indication comprises one or more of a walk-down inspection, modification of an operating set-point, a collaboration, a recommendation, a time check, an analytic escalation, a change in an alarm, or a change in sequential steps.
18. The apparatus of any preceding clause, wherein the first linkage comprises an indication associating the first trigger indication with one or both of the first evidence and the first accompanying interpretation.

## Claims

1. A method comprising:
storing a case data structure in a memory device, the case data structure representing characteristics of a case associated with an abnormality detected in an industrial machine or system, the case data structure comprising:
- an evidence field with evidence, the evidence being a characteristic associated with the industrial machine or system;
- an interpretation field with an interpretation, the interpretation being a user determined condition based at least in part on the evidence; and
- a trigger field with a trigger, the trigger being an occurrence or determination that prompts a user to modify the case data structure;
receiving a first trigger indication at a first time;
modifying one or both of the evidence field and the interpretation field in response to receiving the first trigger indication at the first time to provide one or both of a first evidence and a first accompanying interpretation; and
linking the first trigger indication to one or both of the first evidence and the first accompanying interpretation to provide a first linkage associated with the first time.

2. The method of claim 1, further comprising:
receiving a second trigger indication at a second time;
modifying one or both of the evidence field and the interpretation field in response to receiving the second trigger indication at the second time to provide one or both of a second evidence and a second accompanying interpretation; and
linking the second trigger indication to one or both of the second evidence and the second accompanying interpretation to provide a second linkage associated with the second time.

3. The method of claim 1 or claim 2, further comprising:
storing at least one of the first linkage and the second linkage in the memory device.

4. The method of any preceding claim, further comprising:
displaying at least one of the first linkage and the second linkage on a display device.

5. The method of any preceding claim, further comprising:
transmitting at least a portion of the case data structure to a remote computing device; and
receiving information pertaining to the case from the remote computing device.

6. The method of any preceding claim, wherein the information pertaining to the case received from the remote computing device comprises one or more historical case data structures, the one or more historical case data structures comprising at least one historical linkage comprising historical evidence, a historical interpretation, and a historical trigger.

7. The method of any preceding claim, wherein the interpretation field further comprises:
a diagnosis indicator indicative of a suspected developing failure mode; and
a prognosis indicator indicative of one or more of a case impact and a case urgency.

8. The method of any preceding claim, wherein the first trigger indication comprises one or more of a walk-down inspection, modification of an operating set-point, a collaboration, a recommendation, a time check, an analytic escalation, a change in an alarm, or a change in sequential steps.

9. The method of any preceding claim, wherein the first linkage comprises an indication associating the first trigger indication with one or both of the first evidence and the first accompanying interpretation.

10. An apparatus comprising:
an interface (104) including an input (106) and an output (108);
a memory device (110), the memory device including a case data structure, the case data structure representing characteristics of a case associated with an abnormality detected in an industrial machine or system, the case data structure comprising:
- an evidence field with evidence, the evidence being a characteristic associated with the industrial machine or system;
- an interpretation field with an interpretation, the interpretation being a user determined condition based at least in part on the evidence;
- a trigger field with a trigger, the trigger being an occurrence or determination that prompts a user to modify the case data structure; and
a processor coupled to the memory device and the interface, the processor configured to receive at the input a first trigger indication at a first time, the processor configured to modify one or both of the evidence field and the interpretation field in response to receiving the first trigger indication at the first time to provide one or both of a first evidence and a first accompanying interpretation, the processor further configured to link the first trigger indication to one or both of the first evidence and the first accompanying interpretation to provide a first linkage associated with the first time.

11. The apparatus of claim 10, wherein the processor is further configured to receive at the input a second trigger indication at a second time, the processor further configured to modify one or both of the evidence field and the interpretation field in response to receiving the second trigger indication at the second time to provide one or both of a second evidence and a second accompanying interpretation, the processor further configured to link the second trigger indication to one or both of the second evidence and the second accompanying interpretation to provide a second linkage associated with the second time.

12. The apparatus of claim 10 or claim 11, wherein the memory device is further configured to store at least one of the first linkage and the second linkage.

13. The apparatus of any of claims 10 to 12, further comprising:
a display device configured to display at least one of the first linkage and the second linkage.

14. The apparatus of any of claims 10 to 13, wherein the processor is further configured to transmit via the output at least a portion of the case data structure to a remote computing device, the processor further configured to receive at the input information pertaining to the case from the remote computing device.

15. The apparatus of any of claims 10 to 14, wherein the information pertaining to the case received from the remote computing device comprises one or more historical case data structures, the one or more historical case data structures comprising at least one historical linkage comprising historical evidence, a historical interpretation, and a historical trigger.
